# EUROPEAN PATENT APPLICATION

(11) **EP 3 051 766 A1**
(43) Date of publication of application: **03.08.2016**
(21) Application number: 14791971.6
(22) Date of filing: 11.04.2014
(51) Int. Cl.: H04L 29/06

(54) **CAPABILITY NEGOTIATION PROCESSING METHOD AND DEVICE, AND TELEPRESENCE ENDPOINT**

(30) Priority: 29.09.2013 CN 201310456902
(71) Applicant: ZTE Corporation, Shenzhen City Guangdong Province 518057 (CN)
(72) Inventor: YE, Xiaoyang, Guangdong 518057 (CN); WANG, Liang, Guangdong 518057 (CN)
(74) Representative: Novagraaf Technologies
(86) International application number: PCT/CN2014/075214
(87) International publication number: WO 2014/176965

(57) **Abstract**

Provided are a method and device for performing capability negotiation, and an endpoint. The method includes that: basic capability negotiation is performed via a terminal capability set message of an endpoint, wherein the endpoint is based on an ITU-T H.323 Recommandation, and used in a telepresence system; and secondary capability negotiation is performed on a telepresence feature of the endpoint in a pre-determined mode. By means of the present disclosure, the problem in the relevant art that negotiation of newly added feature parameters of the telepresence system cannot be realized when a conventional protocol is not changed is solved, and the effect of negotiating the newly added feature parameters of the telepresence system without changing the conventional protocol is further achieved.

## Description

### Technical Field

The present disclosure relates to the field of communications, and in particular to a method and device for performing capability negotiation, and a telepresence endpoint.

### Background

Currently, in a video session technology based on an International Telecommunications Union-Telecommunication Standardization Sector (ITU-T) a multimedia communication system based on a packet switched network (H.323), when capability set negotiation is performed by using an ITU-T a multimedia communication control protocol (H.245), only encoding and decoding basic capabilities can be negotiated, and newly added parts of a telepresence system, such as scene description, media capture source description, encoding group description and multi-code stream description, cannot be negotiated. For example, descriptions of a plurality of capture combination from the same meeting place and combination information of a plurality of streams which come from a sending end are allowed to be selected by a receiving end cannot be completed through a conventional H.245 capability negotiation flow. When a logical channel is opened, only encoding and decoding attributes of the logical channel can be assigned, and a multiplexing attribute of the logical channel and a mapping relationship among an identifier of a media source, an identifier of codes and a multiplexing identifier cannot be assigned.

From a technical point of view, a conventional H.323 protocol can be changed, a capability negotiation part of H.245 protocol can be expanded, and newly added feature capabilities of a telepresence endpoint are added into media capability set descriptions of the conventional H.245 protocol. According to the solution, a conventional H.323 protocol stack needs to be corrected, and it will be very difficult from a business point of view. Moreover, it will be very complicated to expand capability set message according to a conventional H.245 grammar.

Thus, the problem that negotiation of newly added feature parameters of a telepresence system cannot be realized when a conventional protocol is not changed exists in the related art.

### Summary

A method and device for performing capability negotiation, and a telepresence endpoint are provided in the embodiment of the present disclosure, which are intended to at least solve the problem in the related art that negotiation of newly added feature parameters of a telepresence system cannot be realized when the conventional protocol is not changed.

According to one aspect of the prevent invention, a method for performing capability negotiation, comprising: performing basic capability negotiation via a terminal capability set message of an endpoint, wherein the endpoint is based on an International Telecommunications Union-Telecommunication Standardization Sector (ITU-T), a multimedia communication system based on a packet switched network (H.323) Recommandation, and used in a telepresence system; and performing secondary capability negotiation on a telepresence feature of the endpoint in a pre-determined mode.

According to an example embodiment, the telepresence feature is described by a telepresence feature parameter, wherein the telepresence feature parameter comprises at least one of: a capture source description, a capture scene description, an encoding attribute description, an encoding group description and a capture simultaneous capability set description.

According to an example embodiment, performing the secondary capability negotiation on the telepresence feature of the endpoint in the pre-determined mode comprises: acquiring channel creation information used for creating a channel for the secondary capability negotiation; creating the channel for the secondary capability negotiation according to the channel creation information; and performing the secondary capability negotiation on the telepresence feature according to the created channel.

According to an example embodiment, performing the secondary capability negotiation on the telepresence feature of the endpoint in the pre-determined mode comprises: encapsulating the telepresence feature into the terminal capability set message; and performing the secondary capability negotiation on the telepresence feature by transmitting the terminal capability set message encapsulated with the telepresence feature.

According to an example embodiment, the telepresence feature is encapsulated into the terminal capability set message in at least one of following manners: encapsulating the telepresence feature serving as an integral character string into the terminal capability set message; and encapsulating the telepresence feature into the terminal capability set message by expanding the telepresence feature to different parts of the terminal capability set message according to a structure of the terminal capability set message.

According to an example embodiment, performing the secondary capability negotiation on the telepresence feature of the endpoint in the pre-determined mode comprises: encapsulating the telepresence feature into an H.245 generic message; and performing the secondary capability negotiation on the telepresence feature by transmitting, via a created H.245 control channel, the H.245 generic message encapsulated with the telepresence feature.

According to an example embodiment, after performing the secondary capability negotiation on the telepresence feature of the endpoint in the pre-determined mode, the method further comprising: opening a bidirectional media logical channel according to a secondary capability negotiation result; and performing media transmission according to the opened bidirectional media logical channel.

According to another aspect of the embodiment of the present disclosure, a device for performing capability negotiation is provided, comprising: a first negotiating component, configured to perform basic capability negotiation via a terminal capability set message of an endpoint, wherein the endpoint is based on an International Telecommunications Union-Telecommunication Standardization Sector (ITU-T), a multimedia communication system based on a packet switched network (H.323) Recommandation, and used in a telepresence system, and a second negotiating component, configured to perform secondary capability negotiation on a telepresence feature of the endpoint in a pre-determined mode.

According to an example embodiment, the second negotiating component comprises: an acquiring element, configured to acquire channel creation information used for creating a channel for the secondary capability negotiation; a creating element, configured to create the channel for the secondary capability negotiation according to the channel creation information; and a first negotiating element, configured to perform the secondary capability negotiation on the telepresence feature according to the created channel.

According to an example embodiment, the second negotiating component comprises: a first encapsulating element, configured to encapsulate the telepresence feature into the terminal capability set message; and a second negotiating element, configured to perform the secondary capability negotiation on the telepresence feature by transmitting the terminal capability set message encapsulated with the telepresence feature.

According to an example embodiment, the first encapsulating element comprises at least one of: a first encapsulating sub-element, configured to encapsulate the telepresence feature serving as an integral character string into the terminal capability set message; and a second encapsulating sub-element, configured to encapsulate the telepresence feature into the terminal capability set message by expanding the telepresence feature to different parts of the terminal capability set message according to a structure of the terminal capability set message.

According to an example embodiment, the second negotiating component comprises: a second encapsulating element, configured to encapsulate the telepresence feature into an H.245 generic message; and a third negotiating element, configured to perform the secondary capability negotiation on the telepresence feature by transmitting, via a created H.245 control channel, the H.245 generic message encapsulated with the telepresence feature.

According to an example embodiment, further comprising: an opening component, configured to open a bidirectional media logical channel according to a secondary capability negotiation result; and a transmitting component, configured to perform media transmission according to the opened bidirectional media logical channel.

According to still another aspect of the embodiment of the present disclosure, a telepresence endpoint is provided, comprising any one of the above devices.

By means of the present disclosure, basic capability negotiation is performed via a terminal capability set message of an endpoint, wherein the endpoint is based on an ITU-T, H.323 Recommandation, and used in a telepresence system; and secondary capability negotiation is performed on a telepresence feature of the endpoint in the pre-determined mode. The problem in the related art that the negotiation of the newly added feature parameters of the telepresence system cannot be realized when the conventional protocol is not changed is solved, and the effect of negotiating the newly added feature parameters of the telepresence system without changing the conventional protocol is further achieved.

### Brief Description of the Drawings

The drawings described herein are intended to provide further understanding of the present disclosure, and form a part of the present disclosure. The schematic embodiments and descriptions of the present disclosure are intended to explain the present disclosure, and do not form improper limits to the present disclosure. In the drawings:
Fig. 1 is a flowchart of a method for performing capability negotiation according to an embodiment of the present disclosure;
Fig. 2 is a structure block diagram of a device for performing capability negotiation according to an embodiment of the present disclosure;
Fig. 3 is a first examplary structure block diagram of the second negotiating component 24 in the device for performing capability negotiation according to an embodiment of the present disclosure;
Fig. 4 is a second examplary structure block diagram of the second negotiating component 24 in the device for performing capability negotiation according to an embodiment of the present disclosure;
Fig. 5 is an examplary structure block diagram of the first encapsulating element 42 in the second negotiating component 24 in the device for performing capability negotiation according to an embodiment of the present disclosure;
Fig. 6 is an examplary structure block diagram of the device for performing capability negotiation according to an embodiment of the present disclosure;
Fig. 7 is a structural diagram of a telepresence endpoint according to an embodiment of the present disclosure;
Fig. 8 is a first capability negotiation and logical channel opening mode according to an embodiment of the present disclosure;
Fig. 9 is an implementation flowchart of performing a first capability negotiation and logical channel opening mode according to an embodiment of the present disclosure;
Fig. 10 is a second capability negotiation and logical channel opening mode according to an embodiment of the present disclosure;
Fig. 11 is an implementation flowchart of performing a second capability negotiation and logical channel opening mode according to an embodiment of the present disclosure;
Fig. 12 is a third capability negotiation and logical channel opening mode according to an embodiment of the present disclosure; and
Fig. 13 is an implementation flowchart of performing a third capability negotiation and logical channel opening mode according to an embodiment of the present disclosure.

### Detailed Description of the Embodiments

The present disclosure is described below with reference to the drawings and the embodiments in detail. It is important to note that the embodiments of the present disclosure and the characteristics in the embodiments can be combined under the condition of no conflict.

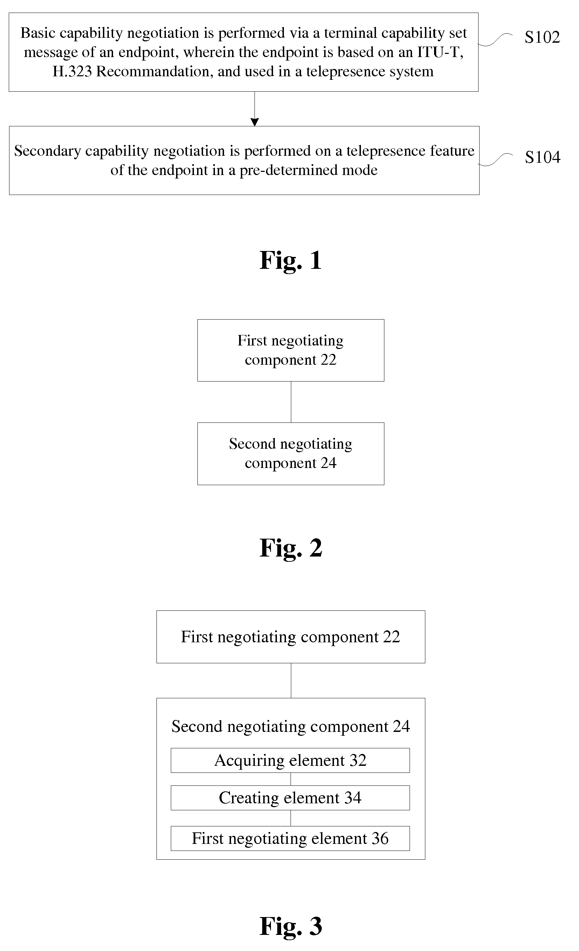

In the embodiment, a method for performing capability negotiation is provided. Fig. 1 is a flowchart of a method for performing capability negotiation according to an embodiment of the present disclosure. As shown in Fig. 1, the flow comprises the steps as follows.

Step S102: Basic capability negotiation is performed via a terminal capability set message of an endpoint, wherein the endpoint is based on an ITU-T, H.323 Recommandation, and used in a telepresence system.

Step S104: Secondary capability negotiation is performed on a telepresence feature of the endpoint in a pre-determined mode, wherein the telepresence feature is described by a telepresence feature parameter which may include at least one of: a capture source description, a capture scene description, an encoding attribute description, an encoding group description and a capture simultaneous capability set description.

By means of the steps, negotiation of the telepresence feature in addition to a basic capability of the telepresence endpoint is realized according to a conventional protocol framework. The telepresence feature is a feature except a basic feature corresponding to a basic capability set, so that the problem in the related art that the negotiation of the newly added feature parameters of the telepresence system cannot be realized when the conventional protocol is not changed is solved. Sessions of the telepresence feature and the basic capability set are processed separately and are convenient to independently process, the effect of negotiating the newly added feature parameters of the telepresence system without changing the conventional protocol is further achieved, and the complexity of expanding capability set is reduced.

Multiple processing modes can be adopted to perform the secondary capability negotiation on the telepresence feature of the endpoint in the pre-determined mode. For example, the secondary capability negotiation can be performed by newly creating a channel. Channel creation information used for creating a channel for the secondary capability negotiation is acquired firstly; the channel for the secondary capability negotiation is created according to the channel creation information; and the secondary capability negotiation is performed on the telepresence feature according to the created channel.

For the other example, the secondary capability negotiation can further be performed by a conventional capability set message. More simply, the telepresence feature can be encapsulated in a terminal capability set message firstly, and then, the secondary capability negotiation is performed on the telepresence feature by transmitting the terminal capability set message encapsulated with the telepresence feature. Multiple processing modes can also be adopted to encapsulate the telepresence feature into the terminal capability set message. For example, the telepresence feature can be encapsulated into the terminal capability set message in at least one of the following manners: the telepresence feature serving as an integral character string is encapsulated into the terminal capability set message; and the telepresence feature is encapsulated into the terminal capability set message by expanding the telepresence feature to different parts of the terminal capability set message according to a structure of the terminal capability set message.

For another example, the secondary capability negotiation can also be performed by transmitting, via an H.245 control channel, a conventional H.245 generic message. The method includes that: firstly, the telepresence feature is encapsulated into an H.245 generic message; and secondly, the secondary capability negotiation is performed on the telepresence feature by transmitting, via the H.245 control channel, the H.245 generic message encapsulated with the telepresence feature,.

In an exemplary embodiment, after the secondary capability negotiation is performed on the telepresence feature of the endpoint in the pre-determined mode, a bidirectional media logical channel can also be opened according to a secondary capability negotiation result; and media transmission is performed according to the opened bidirectional media logical channel. It is important to note that opening of the media logical channel can be re-opening of the logical channel. Because a basic media logical channel can be opened according to a basic capability set negotiation result when a previous basic capability set negotiation is performed. Furthermore, a brand new media logical channel can be created without closing of the basic media logical channel which has been opened previously when the logical channel is re-opened.

In the embodiment, a device for performing capability negotiation is further provided. The device is configured to realize the embodiments and the examplary implementation modes which have been explained without detailed descriptions. Just as a term 'component' used below, the combination of software and/or hardware with predetermined functions can be realized. Although the device described by the following embodiment is better realized by the software, the realization of the hardware and the combination of the software and the hardware may be possible and may be constructed.

Fig. 2 is a structure block diagram of a device for performing capability negotiation according to an embodiment of the present disclosure. As shown in Fig. 2, the device includes a first negotiating component 22 and a second negotiating component 24, and the device is described below.

The first negotiating component 22 is configured to perform basic capability negotiation via a terminal capability set message of an endpoint, wherein the endpoint is based on an ITU-T, H.323 Recommandation, and used in a telepresence system; and the second negotiating component 24 is connected to the first negotiating component 22 and is configured to perform secondary capability negotiation on a telepresence feature of the endpoint in a pre-determined mode.

Fig. 3 is a first examplary structure block diagram of the second negotiating component 24 in the device for performing capability negotiation according to an embodiment of the present disclosure. As shown in Fig. 3, the second negotiating component 24 includes an acquiring element 32, a creating element 34 and a first negotiating element 36, and the second negotiating component 24 is described below.

The acquiring element 32 is configured to acquire channel creation information used for creating a channel for the secondary capability negotiation; the creating element 34 is connected to the acquiring element 32 and is configured to create the channel for the secondary capability negotiation according to the channel creation information; and the first negotiating element 36 is connected to the creating element 34 and is configured to perform the secondary capability negotiation on the telepresence feature according to the created channel.

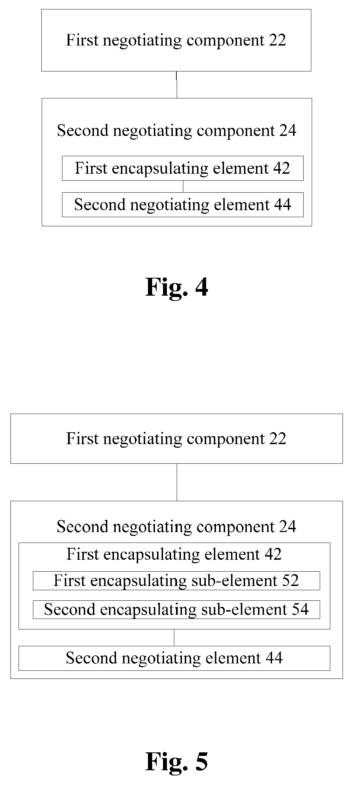

Fig. 4 is a second examplary structure block diagram of the second negotiating component 24 in the device for performing capability negotiation according to an embodiment of the present disclosure. As shown in Fig. 4, the second negotiating component 24 includes a first encapsulating element 42 and a second negotiating element 44, and the second negotiating component 24 is described below.

The first encapsulating element 42 is configured to encapsulate the telepresence feature into the terminal capability set message; and the second negotiating element 44 is connected to the first encapsulating element 42 and is configured to perform the secondary capability negotiation on the telepresence feature by transmitting the terminal capability set message encapsulated with the telepresence feature.

Fig. 5 is an examplary structure block diagram of the first encapsulating element 42 in the second negotiating component 24 in the device for performing capability negotiation according to an embodiment of the present disclosure. As shown in Fig. 5, the first encapsulating element 42 includes at least one of a first encapsulating sub-element 52 and a second encapsulating sub-element 54, and the first encapsulating element 42 is described below.

The first encapsulating sub-element 52 is configured to encapsulate the telepresence feature serving as an integral character string into the terminal capability set message; and the second encapsulating sub-element 54 is configured to encapsulate the telepresence feature into the terminal capability set message by expanding the telepresence feature to different parts of the terminal capability set message according to a structure of the terminal capability set message.

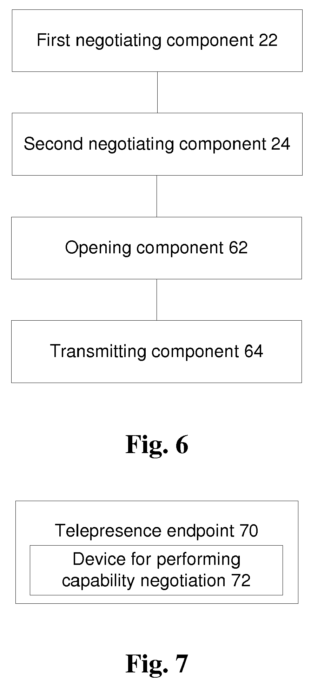

Fig. 6 is an examplary structure block diagram of the device for performing capability negotiation according to an embodiment of the present disclosure. As shown in Fig. 6, the device further includes an opening component 62 and a transmitting component 64 in addition to all the components shown in Fig. 2, and the examplary device is described below.

The opening component 62 is connected to the second negotiating component 24 and is configured to open a bidirectional media logical channel according to a secondary capability negotiation result; and the transmitting component 64 is connected to the opening component 62 and is configured to perform media transmission according to the opened bidirectional media logical channel.

Fig. 7 is a structural diagram of a telepresence endpoint according to an embodiment of the present disclosure. As shown in Fig. 7, the telepresence endpoint 70 includes the device for performing capability negotiation 72 according to any one of the contents mentioned above.

As for the problem in the related art that the negotiation of the newly added feature parameters of the telepresence system cannot be realized when the conventional protocol is not changed, in the embodiment, a method and system for negotiating the telepresence capability based on an ITU H.323 protocol are provided. In the method, in order to facilitate intercommunication with a Session Initiation Protocol (SIP)-based telepresence system defined by a standard organization Internet Engineering Task Force (IETF), newly added feature capability negotiation of the telepresence endpoint and the conventional basic session capability negotiation are processed separately, and therefore newly added feature parameters of the telepresence endpoint can keep consistent to the greatest extent.

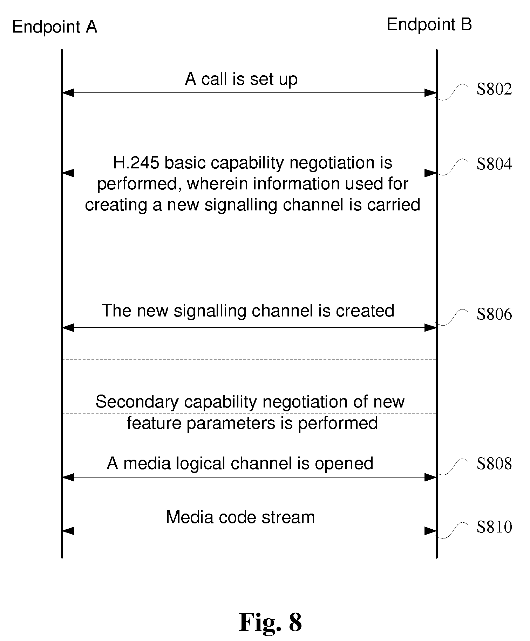

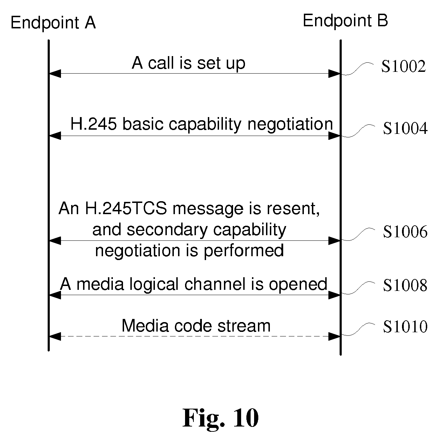

By means of the H.323 protocol-based method and system for negotiating the telepresence capability, the capability negotiation between telepresence endpoints and opening of the media logical channel are completed by performing the secondary capability negotiation and opening the media logical channel. The method for negotiating the telepresence capability can adopt multiple implementation modes, and three implementation modes are simply introduced below.
1. A first mode of the capability negotiation and opening the logical channel. Fig. 8 is a first mode of the capability negotiation and opening the logical channel according to an embodiment of the present disclosure. As shown in Fig. 8, the mode includes the steps as follows.
   Step S802: A call is set up between two telepresence endpoints.
   Step S804: A basic capability set is sent by the two telepresence endpoints via a conventional H.245 message, and information used for creating a new signalling channel is carried, wherein the information used for creating the new signalling channel includes an adopted transmission protocol, an Internet Protocol (IP) address and a port number.
   Step S806: A bidirectional new signalling channel for transferring feature parameters of the telepresence endpoints is created according to the information used for creating the new signalling channel.
   Step S808: By means of the new signalling channel, the feature parameters of the telepresence endpoints are transmitted, and secondary capability negotiation is performed.
   Step S810: According to a secondary capability negotiation result, a bidirectional logical channel is opened, and media transmission is performed via the opened logical channel.

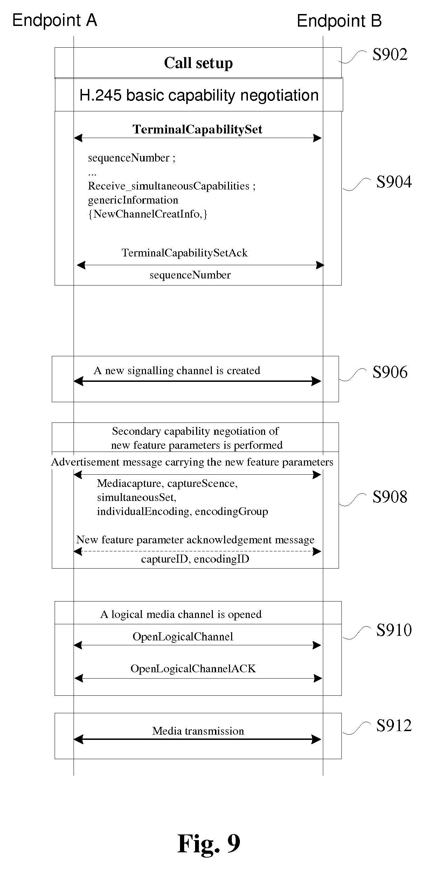

   Fig. 9 is an implementation flowchart of performing a first mode of the capability negotiation and opening the logical channel according to an embodiment of the present disclosure. As shown in Fig. 9, the flow includes the steps as follows.
   Step S902: A call is set up via a conventional H.323 protocol.
   Step S904: Two telepresence endpoints perform H.245 basic media capability negotiation, which can specifically adopt the following processing modes that: the two telepresence endpoints send an H.245 basic media capability set message respectively, and carry information used for newly creating a signalling channel: such as an IP address and a port number; and the two telepresence endpoints send an acknowledgement message of an H.245 media capability set respectively.
   Step S906: A bidirectional new signalling channel for transferring the feature parameters of the telepresence endpoints is created according to the information used for creating the new signalling channel.
   Step S908: Secondary capability negotiation is performed on new feature parameters of the telepresence endpoints by the new signalling channel, and specifically speaking, the two telepresence endpoints send a message carrying telepresence endpoint feature capability parameter advertisement respectively, and select and return an acknowledgement message of the new feature parameters respectively.
   Step S910: According to a secondary capability negotiation result, a media logical channel is opened respectively.
   Step S912: Media stream transmission is performed via the opened media logical channel.
2. A second mode of the capability negotiation and opening logical channel. Fig. 10 is a second mode of the capability negotiation and opening the logical channel according to an embodiment of the present disclosure. As shown in Fig. 10, the mode includes the steps as follows.
   Step S1002: A call is set up between two telepresence endpoints.
   Step S1004: A basic media capability set is sent by the two telepresence endpoints via a conventional H.245 message, and basic media capability negotiation is completed.
   Step S1006: Sending new feature parameters of the telepresence endpoints by using an H.245 capability set message and returning acknowledgement is performed via a conventional H.245 channel, and second capability negotiation is performed. wherein the new feature parameters of the telepresence endpoints can be sent by using the H.245 capability set message in one of the following manners:
   a manner A: the feature parameters, serving as an integral character string, are transparently transmitted to remote endpoints by using the H.245 capability set message; and
   a manner B: the feature parameters are expanded to different parts of a message body respectively according to the structure and grammar of the H.245 capability set message, and transferred to the remote endpoints.

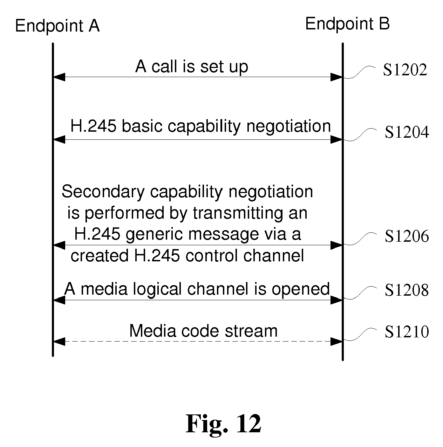

   Step S1008: A bidirectional media logical channel is opened according to a secondary capability negotiation result.
   Step S1010: Media transmission is performed via the opened media logical channel.

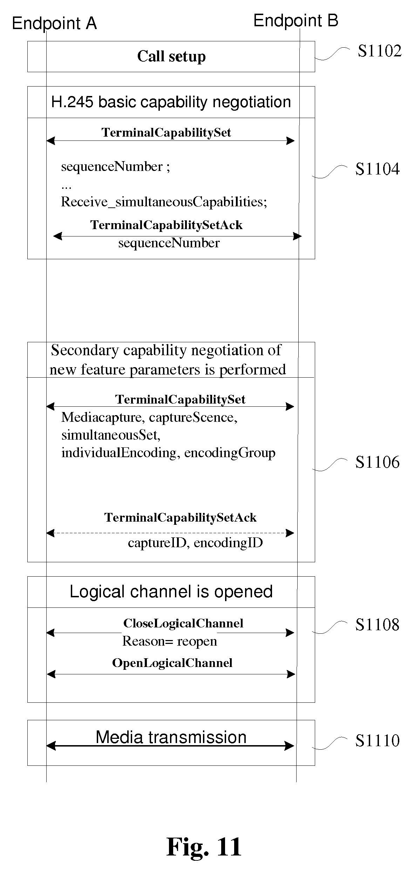

   Fig. 11 is an implementation flowchart of performing a mode of the second capability negotiation and opening the logical channel according to an embodiment of the present disclosure. As shown in Fig. 11, the flow includes the steps as follows.
   Step S1102: A call is set up via a conventional H.323 protocol.
   Step S1104: Two telepresence endpoints perform H.245 basic media capability negotiation, which can adopt the following processing manners that: the two telepresence endpoints send an H.245 basic media capability set message respectively; and the two telepresence endpoints return an acknowledgement message of an H.245 basic media capability set respectively.
   Step S1106: Secondary capability negotiation can be performed on new feature parameters of the telepresence endpoints, for example, by means of the following manners that: the two telepresence endpoints resend a media capability set message via an H.245 channel respectively, wherein the resent media capability set message includes the new feature parameters of the telepresence endpoints; and the two telepresence endpoints send a media capability set acknowledgement message respectively to select and acknowledge the new feature parameters of the telepresence endpoints, and the secondary media capability negotiation is completed.
   Step S1108: A media logical channel is opened respectively according to a secondary capability negotiation result.
   Step S1110: Media stream transmission is performed via the opened media logical channel.
3. A third mode of the capability negotiation and opening the logical channel is adopted. Fig. 12 is a third mode of the capability negotiation and opening logical channel according to an embodiment of the present disclosure. As shown in Fig. 12, the mode includes the steps as follows.

Step S1202: A call is set up between two telepresence endpoints.

Step S1204: The two telepresence endpoints send basic media capability sets via a conventional H.245 message, and basic media capability negotiation is completed.

Step S1206: Sending new feature parameters of the telepresence endpoints by using an H.245 generic message and returning the acknowledgement are performed via a conventional H.245 control channel, and second capability negotiation is performed.

Step S1208: a bidirectional media logical channel is opened according to a secondary capability negotiation result.

Step S1210: Media transmission is performed via the opened media logical channel.

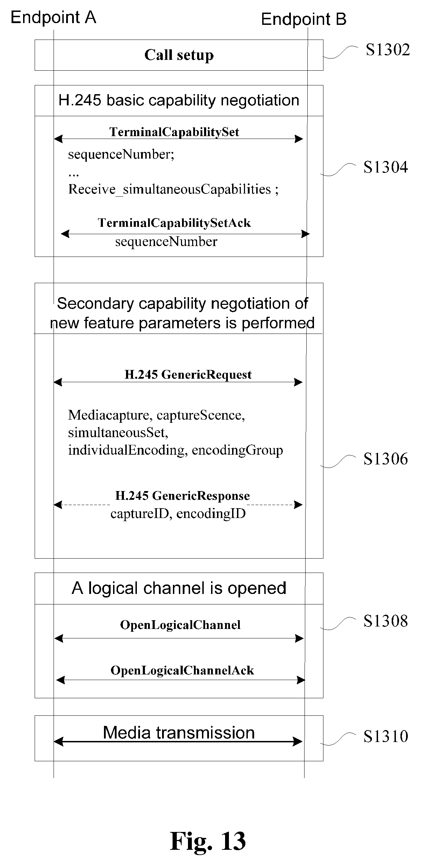

Fig. 13 is an implementation flowchart of a third mode of the capability negotiation and opening the logical channel according to an embodiment of the present disclosure. As shown in Fig. 13, the flow includes the steps as follows.

Step S1302: A call is set up via a conventional H.323 protocol.

Step S1304: Two telepresence endpoints perform H.245 basic media capability negotiation, which can adopt the following processing manners that: the two telepresence endpoints send an H.245 basic media capability set message respectively; and the two telepresence endpoints return respectively an acknowledgement message of an H.245 basic media capability set.

Step S1306: Secondary capability negotiation can be performed on new feature parameters of the telepresence endpoints, for example, the following modes may be adopted: the two telepresence endpoints send an H.245 generic request message via a conventional H.245 control channel respectively, wherein the H.245 generic request message carries the new feature parameters of the telepresence endpoints; and the two telepresence endpoints send an H.245 generic response message respectively to select and acknowledge the new feature parameters of the telepresence endpoints, and secondary media capability negotiation is completed.

Step S1308: A media logical channel is opened respectively according to a secondary capability negotiation result.

Step S1310: Media stream transmission is performed via the opened media logical channel.

It is important to note that multiple new feature parameters of the telepresence endpoints can be included. For example, the new feature parameters of the telepresence endpoints may include at least one of the following: media capture source description information of an endpoint, capture scene description information of the endpoint, media capture simultaneous capability set description information, media encoding description information and media encoding group description information.

The preferred implementation modes are described on the basis of the three implementation modes.

Preferred implementation mode 1: secondary capability negotiation parameters are transmitted via a newly created signalling channel
S1, each of endpoint A and endpoint B is a three-screen telepresence terminal, namely each endpoint is provided with three cameras and three displays;
S2, media capture supported by the endpoint A includes:
   VC0: left camera capture area
   VC1: centre camera capture area
   VC2: right camera capture area
   VC3: panoramic capture area
   VC4: capture auxiliary stream image
   AC0: main stream audio capture
   AC1: auxiliary stream audio capture;
S3, a capture scene of the endpoint A includes: a main scene CS1 and a scene corresponding to auxiliary stream CS2;
S4, a media capture simultaneous capability of the endpoint A includes:
   {VC0, VC1, VC2, VC4}, {VC0, VC3, VC2, VC4}, {AC0 AC1};
S5, an encoding attribute description of the endpoint A includes: ENC0(H.263), ENC1(H.264 base profile), ENC2(H.264 high profile), ENC3(G.711) and ENC4(G.722 wideband audio);
S6, an encoding group description of the endpoint A includes: {ENC0, ENC1, ENC2}, {ENC3, ENC4};
S7, the endpoint A initiates an H.323 call between the endpoint A and the endpoint B, and call connection is established;
S8, the endpoint A sends an H.245 capability set message, wherein the H.245 capability set message carries a terminal basic capability set and information for newly creating a signalling channel, and the endpoint B returns an H.245 capability set acknowledgement message;
   Information needed for newly creating a channel for transmitting secondary capability negotiation parameters can be described in a genericlnformation part in a TerminalCapabilitySet message structure as follows:

   ```
   TerminalCapabilitySet {
   genericlnformation {
   NewChannelProtocal=CLUE/SCTP/DTLS,
   NewChannelAddress=10.192.164,18,
   NewChannelPort=50000,
   }
   };
```
S9, a new signalling channel for transmitting the secondary capability negotiation between the endpoint A and the endpoint B is created via the new channel information;
S10, the endpoint A sends an advertisement message via the new signalling channel, wherein the advertisement message carries a new feature parameter of a telepresence terminal, and describes a media capability supported by this terminal, and message content includes:

   ```
capture source description information: mediaCapture
   {VC0(spatialInformation
                            capturePoint, 'starting point and optical axis of capture
                            apparatus'
                            captureArea, 'a square described by four points')
                      VC1, VC2, VC3, VC4, AC0, AC1},
   capture scene description information: captureScence
   main stream CS1{{VC0,VC1,VC2}, {VC3}, {AC0}}
   auxiliary stream CS2 {{VC4}, {AC1}}
   capture simultaneous capability set description information: simultaneousSet{
   Set1{VC0,VC1,VC2,VC4},
   Set2{VC0,VC3,VC2,VC4}},
   Set3{AC1,AC2}}
   encoding attribute description information: ENC0{
   encodingname=H.263, maxWidth=1920,
   maxHeight=1088, maxFrameRate=60,
   maxPps=124416000, maxBandwidth=4000000},
   ENC1 {
   encodingname=H.264, maxWidth=1280,
   maxHeight=720, maxFrameRate=30,
   maxPps=27648000, maxBandwidth=4000000},
   ENC2{
   encodingname=H.264, maxWidth=1920,
   maxHeight=1088, maxFrameRate=60,
   maxPps=124416000, maxBandwidth=4000000},
   ENC3{
   encodingname=g711, maxBandwidth=64000},
   ENC4{
   encodingname=g722, maxBandwidth=128000},
   encodingGroup {
   encoding group description information: EG0: {ENC0,ENC1,ENC2}
   EG1:{ENC3, ENC4}};
```
S11, the endpoint B returns a configuration message for configuring new feature parameters of the telepresence terminal, and describes to be willing to receive media information from the endpoint A, and the content of the configuration message include:
   {VC3, ENC1},{AC0, ENC3};
S12, as S11 and S12, the endpoint B sends a advertisement message to the endpoint A, wherein the advertisement message carries a new feature parameter, and the endpoint B returns a configuration message, wherein the configuration message carries the new feature parameter;
S13, according to the secondary capability negotiation result, a media logical channel between the endpoint A and the endpoint B is opened. A specific method includes the steps that: the endpoint A sends an H.245 OpenLogicalChannel message, the endpoint B returns an H.245 OpenLogicalChannelAck message, and a logical media channel from the endpoint A to the endpoint B is opened. A media logical channel from the endpoint B to the endpoint A is opened by using the same method;
S14, a media stream can be transmitted between the endpoint A and the endpoint B via the opened media logical channel.

Preferred implementation mode 2: secondary capability negotiation is completed by transmitting an H.245 terminal capability set message via a conventional H.245 channel
S1, each of endpoint A and endpoint B is a three-screen telepresence terminal, namely each endpoint is provided with three cameras and three displays;
S2, media capture supported by the endpoint A includes:
   VC0: left camera capture area
   VC1: centre camera capture area
   VC2: right camera capture area
   VC3: panoramic capture area
   VC4: capture auxiliary stream image
   AC0: main stream audio capture
   AC1: auxiliary stream audio capture;
S3, a capture scene of the endpoint A includes: a main scene CS1 and a scene corresponding to auxiliary stream CS2;
S4, a media capture simultaneous capability set of the endpoint A includes:
   {VC0, VC1, VC2, VC4}, {VC0, VC3, VC2, VC4}, {AC0 AC1};
S5, an encoding attribute description of the endpoint A includes: ENC0(H.263), ENC1(H.264 base profile), ENC2(H.264 high profile), ENC3(G.711) and ENC4(G.722 wideband audio);
S6, an encoding group description of the endpoint A includes: {ENC0, ENC1, ENC2}, {ENC3, ENC4};
S7, the endpoint A initiates an H.323 call between the endpoint A and the endpoint B, and call connection is established;
S8, the endpoint A sends an H.245 capability set message, wherein the H.245 capability set message carries a terminal basic capability set, and the endpoint B returns an H.245 capability set acknowledgement message;
S9, the endpoint A resends an H.245 terminal capability set message TerminalCapabilitySet, wherein the resent H.245 terminal capability set carries telepresence new feature parameters of the endpoint A, and one of the following three manners can be adopted:
   a, message content, serving as an integral character string, is encapsulated in a GenericInformation part in a TerminalCapabilitySet message structure;
   b, the message content, serving as the integral character string, is encapsulated in a GenericCapability part in the TerminalCapabilitySet message structure; and
   c, according to message structure of the TerminalCapabilitySet, the message content is encapsulated in different parts of the TerminalCapabilitySet message structure.
      The content include:

      ```
   capture source description information: mediaCapture
   {VC0(spatialInformation
                            capturePoint, 'starting point and optical axis of capture
                            apparatus'
                            captureArea, 'a square described by four points')
                      VC1, VC2, VC3, VC4, AC0, AC1},
   capture scene description information: captureScence
   main stream CS1{{VC0,VC1,VC2}, {VC3}, {AC0}}
   auxiliary stream CS2 {{VC4}, {AC1}}
   capture simultaneous capability set description information: simultaneousSet{
   Set1{VC0,VC1,VC2,VC4},
   Set2{VC0,VC3,VC2,VC4}},
   Set3{AC1,AC2}}
   encoding attribute description information: ENC0{
   encodingname=H.263, maxWidth=1920,
   maxHeight=1088, maxFrameRate=60,
   maxPps=124416000, maxBandwidth=4000000},
   ENC1 {
   encodingname=H.264, maxWidth=1280,
   maxHeight=720, maxFrameRate=30,
   maxPps=27648000, maxBandwidth=4000000},
   ENC2{
   encodingname=H.264, maxWidth=1920,
   maxHeight=1088, maxFrameRate=60,
   maxPps=124416000, maxBandwidth=4000000},
   ENC3{
   encodingname=g711, maxBandwidth=64000},
   ENC4{
   encodingname=g722, maxBandwidth=128000},
   encodingGroup {
   encoding group description information: EG0: {ENC0,ENC1,ENC2}
   EG1: {ENC3, ENC4}};
```
S10, the endpoint B describes via a terminal capability set acknowledgment message TerminalCapabilitySetAck that the endpoint B is willing to receive media information from the endpoint A. Wherein the message content, serving as the integral character string, can be encapsulated in the Genericlnformation part in the TerminalCapabilitySet message structure, and the content includes:
   {VC3,ENC1}, {AC0,ENC3};
S11, as S10 and S11, the endpoint B sends a terminal capability set message TerminalCapabilitySet containing new feature parameters to the endpoint A, the endpoint B returns the terminal capability set acknowledgment message TerminalCapabilitySetAck, and secondary capability negotiation of the new feature parameters is completed;
S12, according to the secondary capability negotiation result, a media logical channel between the endpoint A and the endpoint B is opened. A specific method includes the steps that: the endpoint A sends an H.245 OpenLogicalChannel message, the endpoint B returns an H.245 OpenLogicalChannelAck message, and a logical media channel from the endpoint A to the endpoint B is opened. A media logical channel from the endpoint B to the endpoint A is opened by using the same method;
S13, a media stream can be transmitted between the endpoint A and the endpoint B via the opened media logical channel.

Preferred implementation mode 3: secondary capability negotiation is completed by transmitting an H.245 generic message via a conventional H.245 channel
S1, each of endpoint A and endpoint B is a three-screen telepresence terminal, namely each endpoint is provided with three cameras and three displays;
S2, media capture supported by the endpoint A includes:
   VC0: left camera capture area
   VC1: centre camera capture area
   VC2: right camera capture area
   VC3: panoramic capture area
   VC4: capture auxiliary stream image
   AC0: main stream audio capture
   AC1: auxiliary stream audio capture;
S3, a capture scene of the endpoint A includes: a main scene CS1 and a scene corresponding to auxiliary stream CS2;
S4, a media capture simultaneous capability set of the endpoint A includes:
   {VC0, VC1, VC2, VC4}, {VC0, VC3, VC2, VC4}, {AC0 AC1};
S5, an encoding attribute description of the endpoint A includes: ENC0(H.263), ENC1(H.264 base profile), ENC2(H.264 high profile), ENC3(G.711) and ENC4(G.722 wideband audio);
S6, an encoding group description of the endpoint A includes: {ENC0, ENC1, ENC2}, {ENC3, ENC4};
S7, the endpoint A initiates an H.323 call between the endpoint A and the endpoint B, and call connection is established;
S8, the endpoint A sends an H.245 capability set message, wherein the H.245 capability set message carries a terminal basic capability set, and the endpoint B returns an H.245 capability set acknowledgement message;
S9, the endpoint A sends an H.245 generic request message GenericRequest, wherein the H.245 generic request message carries telepresence new feature parameters of the endpoint A, and content includes:

   ```
   capture source description information: mediaCapture
   {VC0(spatialInformation
                            capturePoint, 'starting point and optical axis of capture
                            apparatus'
                            captureArea, 'a square described by four points')
                      VC1, VC2, VC3, VC4, AC0, AC1},
   capture scene description information: captureScence
   main stream CS1{{VC0,VC1,VC2}, {VC3}, {AC0}}
   auxiliary stream CS2 {{VC4}, {AC1}}
   capture simultaneous capability set description information: simultaneousSet{
   Set1{VC0,VC1,VC2,VC4},
   Set2{VC0,VC3,VC2,VC4}},
   Set3{AC1,AC2}}
   encoding attribute description information: ENC0{
   encodingname=H.263, maxWidth=1920,
   maxHeight=1088, maxFrameRate=60,
   maxPps=124416000, maxBandwidth=4000000},
   ENC1 {
   encodingname=H.264, maxWidth=1280,
   maxHeight=720, maxFrameRate=30,
   maxPps=27648000, maxBandwidth=4000000},
   ENC2{
   encodingname=H.264, maxWidth=1920,
   maxHeight=1088, maxFrameRate=60,
   maxPps=124416000, maxBandwidth=4000000},
   ENC3{
   encodingname=g711, maxBandwidth=64000},
   ENC4{
   encodingname=g722, maxBandwidth=128000},
   encodingGroup {
   encoding group description information: EG0: {ENC0,ENC1,ENC2}
   EG1: {ENC3, ENC4}};
```
S10, the endpoint B describes via an H.245 generic response message GenericResponse that the endpoint B is willing to receive media information from the endpoint A, and content includes:
   {VC3, ENC1}, {AC0,ENC3};
S11, as S10 and S11, the endpoint B sends the H.245 generic request message GenericRequest containing new feature parameters to the endpoint A, the endpoint B returns the H.245 generic response message GenericResponse, and secondary capability negotiation of the new feature parameters is completed;
S12, according to the secondary capability negotiation result, a media logical channel between the endpoint A and the endpoint B is opened. A specific method includes the steps that: the endpoint A sends an H.245 OpenLogicalChannel message, the endpoint B returns an H.245 OpenLogicalChannelAck message, and a logical media channel from the endpoint A to the endpoint B is opened. A media logical channel from the endpoint B to the endpoint A is opened by using the same method;
S13, a media stream can be transmitted between the endpoint A and the endpoint B via the opened media logical channel.

On the basis of the three preferred implementation modes, it is important to note that:
1, in the three preferred implementation modes, the new feature parameters can be partially placed in the terminal capability set message and the partial new feature parameters are completed during the first capability negotiation, and remaining parts are completed in second capability negotiation;
2, in the three preferred implementation modes, after the second capability negotiation is completed, when the logical channel is opened, the basic media logical channel which might be opened previously may not be closed, a brand new media logical channel is created instead, and a code stream is transmitted in the new media logical channel;
3, in the three preferred implementation modes, the endpoint A and the endpoint B can be telepresence terminals or telepresence Multipoint Control Units (MCU); and
4, in the three preferred implementation modes, one of the endpoint A and the endpoint B can be a telepresence endpoint while the other one is a traditional video session endpoint, when the traditional video session endpoint does not support telepresence new feature parameters, processing is performed according to a video session flow based on traditional H.233 protocol, and media transmission can be performed via the basic media logical channel.

Obviously, those skilled in the art should understand that all modules or all steps in the present disclosure can be realized by using generic computation devices, can be centralized on a single computation device or can be distributed on a network composed of a plurality of computation devices. Optionally, they can be realized by using executable program codes of the computation devices, so that they can be stored in a storage device and executed by the computation devices, the shown or described steps can be executed in a sequence different from this sequence under certain conditions, or they are manufactured into each integrated circuit module respectively, or a plurality of modules or steps therein are manufactured into a single integrated circuit module. Thus, the present disclosure is not limited to combination of any specific hardware and software.

The above is only the preferred embodiments of the present disclosure, and is not intended to limit the present disclosure. There can be various modifications and variations in the present disclosure for those skilled in the art. Any modifications, equivalent replacements, improvements and the like within the spirit and principle of the present disclosure shall fall within the protection scope of the present disclosure.

### Industrial Applicability

As mentioned above, the method and device for performing capability negotiation and the endpoint provided by the embodiments of the present disclosure may bring the following beneficial effects that: the problem in the related art that the negotiation of the newly added feature parameters of the telepresence system cannot be realized when the conventional protocol is not changed is solved, and the effect of negotiating the newly added feature parameters of the telepresence system without changing the conventional protocol is further achieved.

## Claims

1. A method for performing capability negotiation, comprising:
performing basic capability negotiation via a terminal capability set message of an endpoint, wherein the endpoint is based on an International Telecommunications Union-Telecommunication Standardization Sector, ITU-T, a multimedia communication system based on a packet switched network, H.323, Recommandation, and used in a telepresence system; and
performing secondary capability negotiation on a telepresence feature of the endpoint in a pre-determined mode.

2. The method as claimed in claim 1, wherein the telepresence feature is described by a telepresence feature parameter, wherein the telepresence feature parameter comprises at least one of:
a capture source description, a capture scene description, an encoding attribute description, an encoding group description and a capture simultaneous capability set description.

3. The method as claimed in claim 1, wherein performing the secondary capability negotiation on the telepresence feature of the endpoint in the pre-determined mode comprises:
acquiring channel creation information used for creating a channel for the secondary capability negotiation;
creating the channel for the secondary capability negotiation according to the channel creation information; and
performing the secondary capability negotiation on the telepresence feature according to the created channel.

4. The method as claimed in claim 1, wherein performing the secondary capability negotiation on the telepresence feature of the endpoint in the pre-determined mode comprises:
encapsulating the telepresence feature into the terminal capability set message; and
performing the secondary capability negotiation on the telepresence feature by transmitting the terminal capability set message encapsulated with the telepresence feature.

5. The method as claimed in claim 4, wherein the telepresence feature is encapsulated into the terminal capability set message in at least one of following manners:
encapsulating the telepresence feature serving as an integral character string into the terminal capability set message; and
encapsulating the telepresence feature into the terminal capability set message by expanding the telepresence feature to different parts of the terminal capability set message according to a structure of the terminal capability set message.

6. The method as claimed in claim 1, wherein performing the secondary capability negotiation on the telepresence feature of the endpoint in the pre-determined mode comprises:
encapsulating the telepresence feature into an ITU-T a multimedia communication control protocol, H.245, generic message; and
performing the secondary capability negotiation on the telepresence feature by transmitting, via a created H.245 control channel, the H.245 generic message encapsulated with the telepresence feature.

7. The method as claimed in any one of claims 1 to 6, after performing the secondary capability negotiation on the telepresence feature of the endpoint in the pre-determined mode, the method further comprising:
opening a bidirectional media logical channel according to a secondary capability negotiation result; and
performing media transmission according to the opened bidirectional media logical channel.

8. A device for performing capability negotiation, comprising:
a first negotiating component, configured to perform basic capability negotiation via a terminal capability set message of an endpoint, wherein the endpoint is based on an International Telecommunications Union-Telecommunication Standardization Sector, ITU-T, a multimedia communication system based on a packet switched network, H.323, Recommandation, and used in a telepresence system, and
a second negotiating component, configured to perform secondary capability negotiation on a telepresence feature of the endpoint in a pre-determined mode.

9. The device as claimed in claim 8, wherein the second negotiating component comprises:
an acquiring element, configured to acquire channel creation information used for creating a channel for the secondary capability negotiation;
a creating element, configured to create the channel for the secondary capability negotiation according to the channel creation information; and
a first negotiating element, configured to perform the secondary capability negotiation on the telepresence feature according to the created channel.

10. The device as claimed in claim 8, wherein the second negotiating component comprises:
a first encapsulating element, configured to encapsulate the telepresence feature into the terminal capability set message; and
a second negotiating element, configured to perform the secondary capability negotiation on the telepresence feature by transmitting the terminal capability set message encapsulated with the telepresence feature.

11. The device as claimed in claim 10, wherein the first encapsulating element comprises at least one of:
a first encapsulating sub-element, configured to encapsulate the telepresence feature serving as an integral character string into the terminal capability set message; and
a second encapsulating sub-element, configured to encapsulate the telepresence feature into the terminal capability set message by expanding the telepresence feature to different parts of the terminal capability set message according to a structure of the terminal capability set message.

12. The device as claimed in claim 8, wherein the second negotiating component comprises:
a second encapsulating element, configured to encapsulate the telepresence feature into an H.245 generic message; and
a third negotiating element, configured to perform the secondary capability negotiation on the telepresence feature by transmitting, via a created H.245 control channel, the H.245 generic message encapsulated with the telepresence feature.

13. The device as claimed in any one of claims 8 to 12, further comprising:
an opening component, configured to open a bidirectional media logical channel according to a secondary capability negotiation result; and
a transmitting component, configured to perform media transmission according to the opened bidirectional media logical channel.

14. A telepresence endpoint, comprising the device as claimed in any one of claims 8 to 13.
